# EUROPÄISCHE PATENTSCHRIFT

(11) **EP 0 782 665 B1**
(45) Veröffentlichungstag und Bekanntmachung des Hinweises auf die Patenterteilung: **05.08.1998**
(21) Anmeldenummer: 95933382.4
(22) Anmeldetag: 18.09.1995
(51) Int. Cl.: F02F 1/38

(54) **BRENNKRAFTMASCHINE**
INTERNAL COMBUSTION ENGINE
MOTEUR A COMBUSTION INTERNE

(30) Priorität: 19.09.1994 DE 4433280; 19.09.1994 DE 4433282
(43) Veröffentlichungstag der Anmeldung: 09.07.1997
(73) Patentinhaber: MOTOREN-WERKE MANNHEIM AG, D-68167 Mannheim (DE)
(72) Erfinder: HITZIGER, Hubert, D-67549 Worms (DE); WINTER, Norbert, D-68309 Mannheim (DE); WEICKEL, Hans, D-68307 Mannheim (DE)
(74) Vertreter: Nau, Walter, Dipl.-Ing.
(86) Internationale Anmeldenummer: EP9503658
(87) Internationale Veröffentlichungsnummer: WO9609467

(56) Entgegenhaltungen:
- FR-A- 2 149 881
- FR-A- 2 306 340
- GB-A- 1 111 149
- GB-A- 2 009 846
- GB-A- 2 021 691
- US-A- 4 889 080

## Beschreibung

Die Erfindung betrifft eine Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder bewegbar ist, wobei in den Zylinderkopf mit Gaswechselkanälen zusammenwirkende Gaswechselventile, ein Einspritzventil, eine oberhalb des Zylinderkopfbodens angeordnete Zwischenwand und zumindest ein erster Kühlflüssigkeitsraum mit einem Zugang und einem Abgang angeordnet sind, wobei der Kühlflüssigkeitsraum einen zwischen dem Zylinderkopfboden und der Zwischenwand angeordneten außenliegenden, durchgehenden Ringraum umfaßt, der über geradlinige Kühlbohrungen mit einem mittig zu dem Zylinderkopfboden angeordneten Einspritzventilkühlraum verbunden ist.

Eine derartige gattungsgemäße Brennkraftmaschine ist aus der US-A 4,889,080 bekannt. Diese Brennkraftmaschine weist einen 4-Ventil-Zylinderkopf mit einem zentralen Einspritzventil auf. Die Kühlflüssigkeit strömt über mehrere integrierte Zugänge in einem unteren, äußeren Ringraum, um von dort durch Kühlbohrungen in einen von dem Einspritzventil durch eine Gehäusewand getrennten Kühlraum zu gelangen. Von dort gelangt die Kühlflüssigkeit in einen oberen Ringraum, der von dem unteren Ringraum durch eine abgewinkelte im wesentlichen kreisförmige Zwischenwand getrennt ist.

Weiterhin ist aus der DE-B 12 94 096 eine Brennkraftmaschine bekannt, bei der zur Kühlung des Zylinderkopfbodens Kühlflüssigkeit über insgesamt 8 Zugänge in einzelne in dem Zylinderkopf angeordnete äußere Kühlräume strömt, um von dort über gegossene Kanäle in einen inneren Kühlraum zu gelangen, der das Einspritzventil umgibt. Von diesem inneren Kühlraum gelangt die Kühlflüssigkeit direkt in einen Ausgang.

Schließlich ist aus der GB-A 2 009 846 eine Brennkraftmaschine mit einem Zylinderkopf bekannt, der im Zylinderkopfboden eine Vielzahl von verschachtelten Bohrungen aufweist, durch die Kühlflüssigkeit geleitet wird.

Der Erfindung liegt die Aufgabe zugrunde, eine Brennkraftmaschine bereitzustellen, bei der die Kühlung insbesondere des Zylinderkopfs gegenüber dem Stand der Technik verbessert ist. Dabei soll der Zylinderkopf konstruktiv klar gegliedert, steif ausgebildet sein und für eine einfache Montage geeignet sein.

Diese Aufgabe wird dadurch gelöst, daß ein zwischen dem Zylinderkopfboden und einer Zwischenwand angeordneter Kühlraum einen außenliegenden, durchgehenden Ringraum umfaßt, der über geradlinige Kühlbohrungen mit einem mittig in dem Zylinderkopfboden angeordneten Einspritzventilkühlraum verbunden ist, und daß insbesondere weitere Kühlkanäle vorhanden sind, die zumindest einen Auslaßventilkühlraum mit dem Ringraum und dem Einspritzventilkühlraum verbinden. Durch diese Ausbildung wird eine effektive und wirkungsvolle Kühlung des Zylinderkopfs in den thermisch beanspruchten Bereichen ermöglicht, wobei darüber hinaus dieser Zylinderkopf konstruktionstechnisch günstig ausgebildet ist. Dadurch, daß ein außenliegender, durchgehender Ringraum vorhanden ist, wird eine Verteilung der in den Zylinderkopf eintretenden Kühlflüssigkeit auf dessen gesamten Umfang erreicht, so daß insgesamt ein ausgeglichenes und gleichmäßiges Temperaturniveau eingestellt ist. Dieser Ringraum ist über geradlinige Kühlbohrungen mit einem mittig in dem Zylinderkopfboden angeordneten Einspritzventilkühlraum verbunden. Dabei ist das Einspritzventil direkt oder unter Einbezug einer Schutzhülse, die einen Wechsel des Einspritzventils ohne Ablaß der Kühlflüssigkeit ermöglicht, in den Einspritzventilkühlraum eingesetzt. Dadurch wird eine effektive Kühlung des Einspritzventils sichergestellt. Die geradlinigen Kühlbohrungen lassen sich bei der Bearbeitung des Zylinderkopfs ohne großen Aufwand anbringen und ermöglichen eine genaue Dosierung der einzelnen Kühiströme. Gleiches gilt für die Kühlkanäle, die einen Auslaßventilkühlraum mit dem Ringraum und dem Einspritzventilkühlraum verbinden. Auch diese Kanäle können beispielsweise durch Bohren einfach gefertigt werden. Der Auslaßventilkühlraum wird vorteilhaft durch eine entsprechende Ausnehmung zwischen einem Ventilsitzring und dem Zylinderkopfgehäuse gebildet. Dabei wird dann der Ventilsitzring nach der Anbringung des Kühlkanals eingesetzt. Weiterhin ist die Zwischenwand kegelig ausgebildet und weist auf der von dem Zylinderkopfboden wegweisenden Seite einen konkaven Verlauf, während sie auf der von dem Ringraum, den Kühlbohrungen und den Kühlkanälen gebildeten Seite im wesentlichen geradlinig ausgebildet ist. Dabei ist die Zwischenwand im Bereich der Einspritzventilsitzfläche auf dem Zylinderkopfboden mit dem Zylinderkopfboden verbunden. Durch die schräge Anbindung zu den Zylinderkopfseitenwänden ist eine gute Abstützung des Zylinderkopfbodens zu den Zylinderkopfseitenwänden gegeben.

In Weiterbildung der Erfindung ist in der den Ringraum umgebenden äußeren Zylinderkopfumfangswand zumindest ein Zugang eingelassen, der den Ringraum mit einem Zylinderkühlraum verbindet. Dieser Zugang kann beim Gießen des Zylinderkopfs eingegossen bzw. ausgespart werden oder aber zumindest teilweise durch nachträgliche Bearbeitungsschritte gefertigt werden. Dabei sind vorzugsweise vier Zugänge auf dem Umfang des Zylinderkopfs verteilt, die eine wirkungsvolle und gut verteilte Versorgung des Zylinderkopfs mit Kühlflüssigkeit ermöglichen.

In Weiterbildung der Erfindung strömt die Kühlflüssigkeit von dem Ringraum durch die Kühlbohrungen und die Kühlkanälen in den Einspritzventilkühlraum, der ein Bestandteil der sich oberhalb des Zylinderkopfbodens erstreckenden Kühlräume ist. Durch diese Ausbildung ist eine wirkungsvolle und effiziente Kühlung der thermisch belasteten Bereiche in den Zylinderkopf sichergestellt. Dabei kann es auch vorgesehen sein, daß von dem Ringraum direkt Verbindungsbohrungen zu den oberen Kühlräumen bestehen, die einen dosierten Kühlstrom direkt in diese Kühlräume entweichen lassen und zugleich die Entlüftung des Ringraumes bewirken.

In Weiterbildung der Erfindung ist der Abgaskanal zumindest teilweise kühlflüssigkeitsumströmt. Dabei wird der Abgaskanal vor dem Austritt der Kühlflüssigkeit aus dem Zylinderkopf quasi als letztes Glied in der Kühlkette umströmt.

In Weiterbildung der Erfindung ist im Bereich unterhalb eines Abgaskanalanschlußflansches ein Ausgang und neben dem Abgaskanalanschlußflansch ein Abfluß der Kühlflüssigkeit aus dem Zylinderkopf vorgesehen. Je nach dem, ob die Brennkraftmaschine als Reihenmotor mit im wesentlichen vertikal ausgerichteten Zylinderrohren oder als V-Maschine mit Schrägstellung der Zylinderrohre ausgebildet ist, werden entweder die Ausgänge oder die Abflüsse an eine Abwassersammelleitung angeschlossen, da bei der vertikalen Ausrichtung der Zylinderrohre die Abflüsse geodätisch höher liegen als die Ausgänge. Diese Anordnung hat den Vorteil, daß insbesondere in Verbindung mit der in Weiterbildung vorgesehenen Absperrbarkeit der Verteilleitung zu dem Zulauf und der Verbindbarkeit des Zulaufs mit einer Ablaßleitung gezielt eine Zylindereinheit "trockengelegt" werden kann und somit die Zylindereinheit ohne Ablaß der Kühlflüssigkeit aus der gesamten Brennkraftmaschine teilweise oder komplett demontiert werden kann.

In Weiterbildung der Brennkraftmaschine ist bei Ausbildung der Brennkraftmaschine mit zwei V-förmig angeordneten Zylinderreihen die Konkavität der Zwischenwand so bemessen, daß deren geodätisch tiefster Punkt in dem Einspritzventilkühlraum liegt. Diese Ausbildung hat den Vorteil, daß beim Ablassen der Kühlflüssigkeit sichergestellt ist, daß die Kühlflüssigkeit vollständig aus dem Zylinderkopf entfernt wird. Dies ist einerseits für eine komplikationsfreie Wartung und Reparatur günstig, andererseits in Extremfällen, wenn beim Stillstand der Brennkraftmaschine wegen Frost die nicht mit Zusätzen versehene Kühlflüssigkeit, die also normales Wasser ist, abgelassen werden muß. Für diesen Fall ist dann der erfindungsgemäß ausgebildete Zylinderkopf wie auch sämtliche anderen kühlflüssigkeitsführenden Teile der Brennkraftmaschine so ausgestaltet, daß keine Kühlflüssigkeit zurückbleibt.

In Weiterbildung der Erfindung ist der Zylinderkühlraum in ein Zwischengehäuse eingelassen. Damit ist dieser Zylinderkühlraum aus dem eigentlichen Kurbelgehäuse herausgenommen, so daß in dem Kurbelgehäuse keine direkten Kühlräume vorhanden sind. In dem Kurbelgehäuse ist lediglich die in Weiterbildung vorgesehene Verteilleitung angeordnet, die mit einem Zulauf zu dem Zylinderkühlraum in Verbindung steht. Zudem umfaßt der Zylinder ein Zylinderrohr, das in das Zwischengehäuse einsetzbar ist und mit einem umlaufenden Bund zwischen dem Zylinderkopf und dem Zwischengehäuse verspannbar ist. In einem Bereich unterhalb des Zulaufs ist das Zylinderrohr gegenüber dem Zwischengehäuse abgedichtet. Wird, wie zuvor beschrieben, die Verteilleitung zu dem Zulauf einer Zylindereinheit abgesperrt und die Kühlflüssigkeit aus dieser Zylindereinheit abgelassen, so kann diese Zylindereinheit insgesamt von dem Kurbelgehäuse abgenommen werden, ohne daß die Gefahr besteht, daß Reste von Kühlflüssigkeit durch die Zylinderöffnung in das Kurbelgehäuse eintreten. Dies wird dadurch verhindert, daß in diesem Bereich während der Montage keine kühlflüssigkeitsführende Verbindung geöffnet wird.

Durch die weiteren Vorrichtungsansprüche und Verfahrensansprüche wird der Montagevorgang verbessert und optimiert.

Dies wird zunächst dadurch erreicht, daß der Zylinderkopf, das Zwischengehäuse, das Zylinderrohr, der Kolben und das Pleuel eine Montageeinheit bilden, die vormontierbar ist. Somit können diese Bauteile an anderer Stelle von ggfs. speziell für die Montage dieser Bauteile geschulten Monteuren montiert werden und als so vorgefertigte Montageeinheit an der Brennkraftmaschine angebaut werden. Dadurch läßt sich die Endmontage der Brennkraftmaschine zeitlich deutlich verkürzen, da beispielsweise bei einer 16-zylindrigen V-Brennkraftmaschine die 16 Zylindereinheiten nicht mehr nacheinander an der Brennkraftmaschine montiert werden müssen, sondern die 16 Zylindereinheiten als einzelne Montageeinheiten zeitsparend anbaubar sind. Zudem brauchen die die Endmontage der Brennkraftmaschine vornehmenden Monteuere nicht mit den Montagevorschriften für alle Einzelbauteile vertraut sein, so daß auch beispielsweise das Neu-Anlernen eines Monteurs schneller erfolgen kann und somit weniger aufwendig ist. Schließlich läßt sich in einem Reparaturfall eine beispielsweise defekte Zylindereinheit als Montageeinheit schneller austauschen, als wenn die Einzelbauteile einzeln demontiert und anschließend wieder die Neuteile montiert werden müssen. Dadurch wird die Stillstandszeit der Brennkraftmaschine deutlich reduziert.

In Weiterbildung der Erfindung ist der Zylinderkopf mit dem Zwischengehäuse über Montageschrauben verschraubbar, und das Zylinderrohr ist über einen Ringflansch zwischen dem Zylinderkopf und dem Zylinderrohr eingeklemmt. Durch diese Ausbildung wird mit einfachen Mitteln eine Montageeinheit geschaffen, die ohne wesentlichen Mehraufwand an Bauteilen vormontierbar ist. Dabei sind in einer bevorzugten Ausführungsform vier Montageschrauben vorgesehen, die am Umfang der Zylindereinheit zur Verschraubung des Zwischengehäuses mit dem Zylinderkopf verteilt sind. Dabei brauchen diese Montageschrauben auch nach der Montage der Montageeinheit nicht demontiert zu werden, obwohl dies im Einzelfall durchaus vorgesehen sein kann.

In Weiterbildung der Erfindung sind der Kolben und das Pleuel mit einer Haltevorrichtung in dem Zylinderrohr in einer vorgegebenen Position fixierbar. Während bei kleineren Brennkraftmaschinen der Kolben mit dem angebauten Pleuel bei der Vormontage ggfs. nur in das Zylinderrohr eingeschoben werden braucht und durch die Vorspannung der Kolbenringe in dem Zylinderrohr verbleibt, ist insbesondere bei mittleren und größeren Brennkraftmaschinen eine Fixierung von Kolben und Pleuel notwendig und sinnvoll. Diese Fixierung dient einerseits dazu, daß der Kolben mit dem angebauten Pleuel nicht unbeabsichtigt aus dem Zylinderrohr aufgrund seines Gewichtes herausrutschen kann und darüberhinaus bei der Montage der Montageeinheit eine genau definierte Montagestellung inne hat. Andererseits verhindert die Haltevorrichtung, daß das Pleuel sich beispielsweise beim Transport aufgrund seiner gelenkigen Anlenkung an dem Kolben um diese Schwenkachse unkontrolliert bewegen kann und somit zu Beschädigungen führen kann.

In Weiterbildung der Erfindung ist die Haltevorrichtung ein am unteren Ende des Zylinderrohrs befestigbares Halteelement, das den Kolben in seine OT-Stellung drückt und weiterhin ein Klemmelement ist, daß das Pleuel zumindest angenähert mittig in Bezug zu der Zylinderrohrlängsebene festlegt. Die Ausbildung der Haltevorrichtung als Halteelement und Klemmelement ermöglicht mit einfachen Mitteln die ladegenaue und sichere Festlegung von Kolben und Pleuel in einer genau vorbestimmbaren Position. Dabei kann das Halteelement und das Klemmelement in einer bevorzugten Ausführungsform aus einem federnden Material hergestellt sein. Das Halteelement und das Klemmelement können zu einem Bauteil zusammengefaßt sein und nach der Montage der Montageeinheit durch eine Montageöffnung in dem Kurbelgehäuse entfernt werden.

In Weiterbildung der Erfindung ist die Haltevorrichtung ein Montagebügel, der am unteren Ende des Zylinderrohres und an einem Pleuellagerdeckelgewinde des Pleuels verschraubbar ist. Durch diese Ausbildung ist eine sehr exakte Lagefixierung des Kolbens und des Pleuels möglich. Darüberhinaus ist dadurch, daß der Montagebügel an einer Pleuellagerdeckelbohrung befestigt ist, ein "Vergessen" des Montagebügels nach der Montage der Montageeinheit ausgeschlossen, da der Montagebügel entfernt werden muß, um den Pleuellagerdeckel zu montieren.

In Weiterbildung der Erfindung umfaßt die Montageeinheit alle zugehörigen Bauteile, wie Einspritzventil, Einspritzpumpenelement, Einspritzleitung, Stoßstangen, Rollenstößel usw. Dabei ist es selbstverständlich so, daß die Bauteile, wie Stoßstangen und Rollenstößel so gehalten sind, daß diese sich während des Transports und der Montage der Montageeinheit nicht verschieben können und insbesondere nicht verlorengehen können. Bezüglich der Maßtoleranzen zwischen der Nockenwelle und der Auflagefläche des Zwischengehäuses auf dem Kurbelgehäuse können diese so genau bemessen sein, daß der Förderbeginn und/oder das Ventilspiel der Gaswechselventile an einer Montagevorrichtung schon bei der Vormontage einstellbar sind.

Weitere Ausgestaltungen der Erfindung sind der nachfolgenden Zeichnungsbeschreibung zu entnehmen, in der ein in den Figuren dargestelltes Ausführungsbeispiel der Erfindung näher beschrieben ist.

Es zeigen:
- Figur 1:: Einen Schnitt durch einen Teilbereich einer Zylindereinheit im Bereich eines Einlaßventils und eines Auslaßventils,

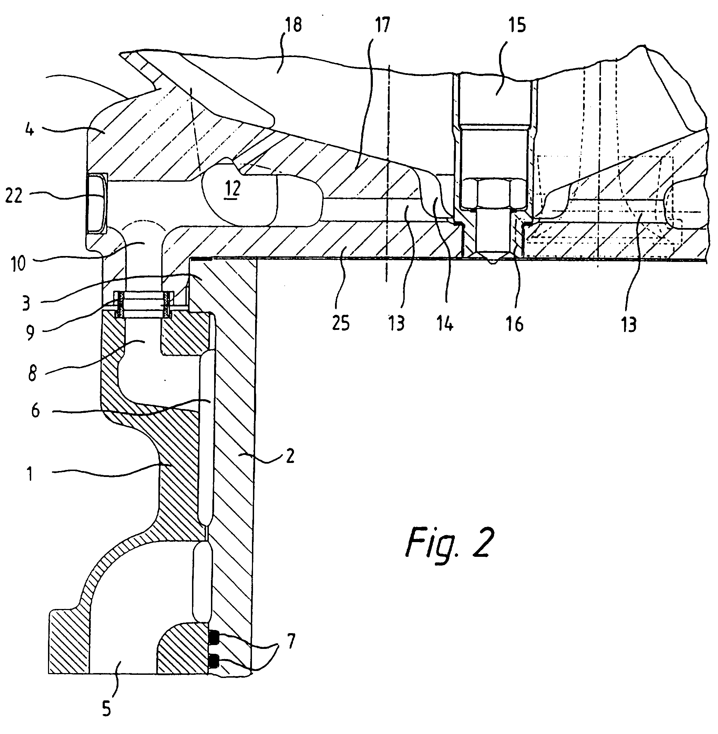

- Figur 2:: einen ähnlichen Schnitt gemäß Figur 1 im Bereich eines Einspritzventils,

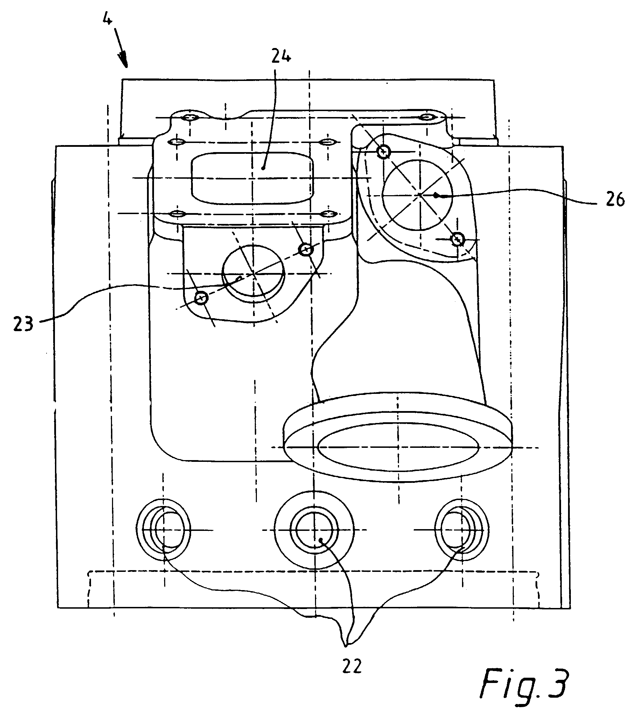

- Figur 3:: eine Seitenansicht eines Zylinderkopfs mit Sicht auf einen Abgaskanalanschlußflansch

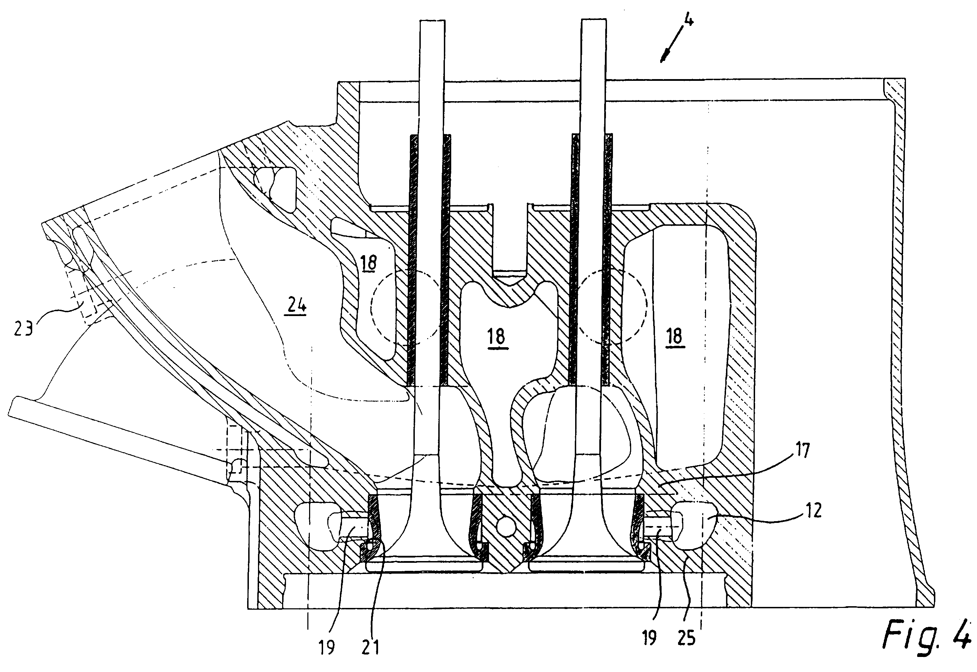

- Figur 4:: einen Schnitt durch einen Zylinderkopf durch die Ebene der Auslaßventile und des Auslaßkanals

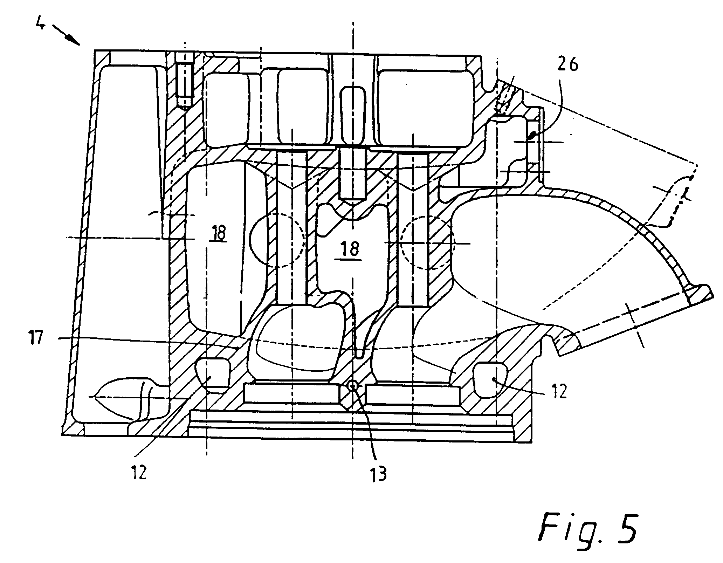

- Figur 5:: einen Schnitt durch einen Zylinderkopf durch die Ebene der Einlaßventile und des Einlaßkanals,
- Figur 6:: einen Querschnitt durch einen Zylinderkopf und
- Figur 7:: eine Montageeinheit unter Einbezug des Zylinderkopfs.

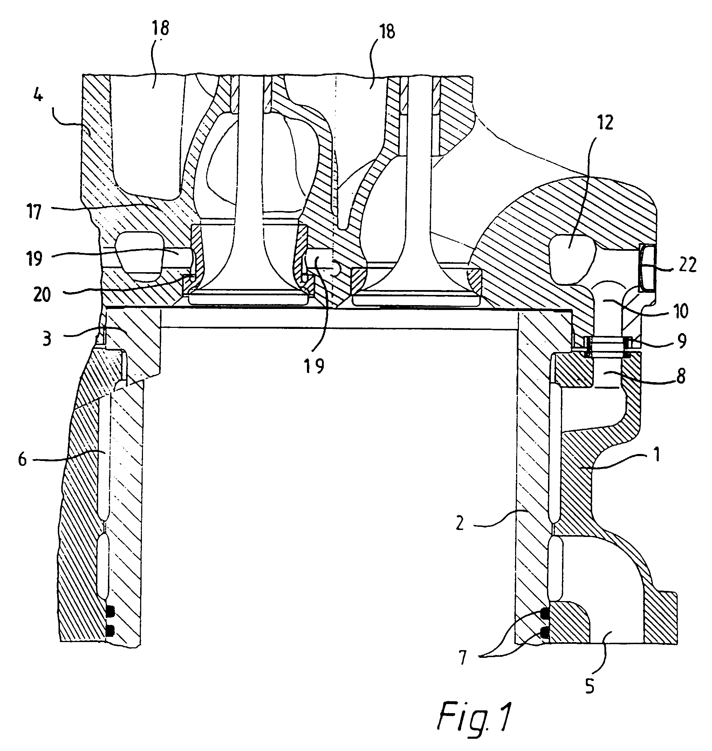

Die Zylindereinheit gemäß Figur 1 zeigt ein Zwischengehäuse 1, das auf einem Kurbelgehäuse einer Brennkraftmaschine aufgesetzt wird. In das Zwischengehäuse 1 ist ein Zylinderrohr 2 eingeschoben und ragt bis in das Kurbelgehäuse hinein. Das Zylinderrohr 2 weist einen umlaufenden Bund 3 auf, mit dem es auf dem Zwischengehäuse 1 aufliegt. Auf dem Zwischengehäuse 1 und dem Zylinderrohr 2 ist ein Zylinderkopf 4 aufgesetzt und über Zuganker mit dem Kurbelgehäuse verspannt.

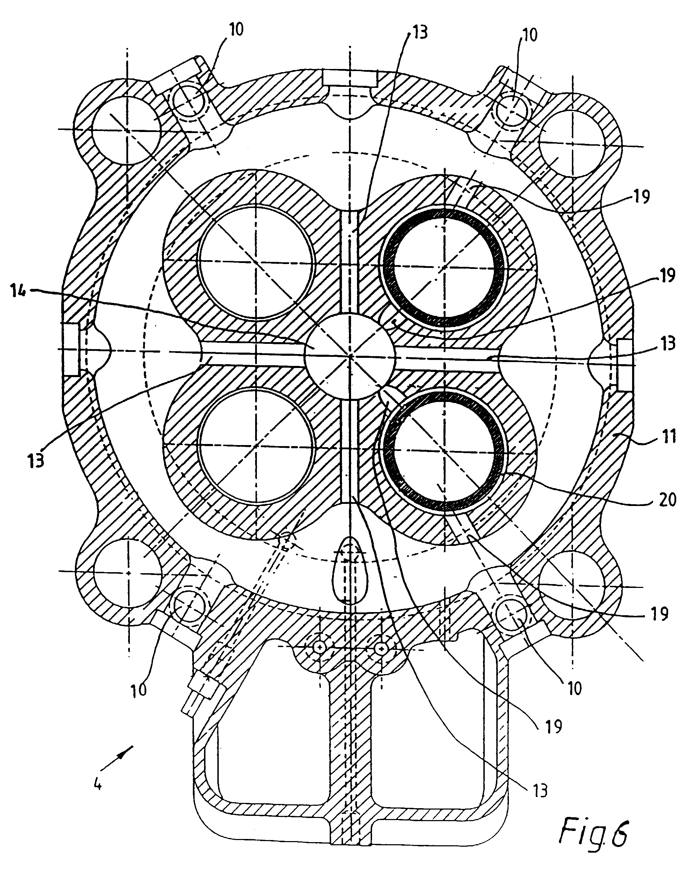

In dem Kurbelgehäuse ist eine Verteilleitung für Kühlflüssigkeit eingelassen, die Öffnungen aufweist, die jeweils mit einem Zulauf 5 in dem Zwischengehäuse 1 verbunden sind. Der Zulauf 5 führt die Kühl¶ flüssigkeit zu einem Zylinderkühlraum 6, der zwischen dem Zylinderrohr 2 und dem Zwischengehäuse 1 gebildet ist. In einem Bereich unterhalb des an das Zylinderrohr 1 gelangenden Zulaufs 5 ist das Zylinderrohr 2 gegenüber dem Zwischengehäuse 1 durch Dichtungen 7 abgedichtet. Die Kühlflüssigkeit gelangt von dem Zylinderkühlraum 6 über Steigkanäle 8 und Verbindungsstücke 9 in Zugänge 10 in den Zylinderkopf. Diese Zugänge 10 sind (Figur 6) auf der Zylinderkopfumfangswand 11 verteilt angeordnet. Von diesen Zugängen 10 gelangt die Kühlflüssigkeit in einen außenliegenden, durchgehenden Ringraum 12 des Zylinderkopfs. Von diesem Ringraum 12 gelangt die Kühlflüssigkeit durch geradlinige Kühlbohrungen 13 in enen Einspritzventilkühlraum 14. In diesen Einspritzventilkühlraum 14 ist ein Einspritzventil 15 unter Einfügung einer Hülse 16 eingesetzt. Die Hülse 16 ist gegenüber dem Einspritzventilkühlraum 14 abgedichtet, so daß bei einem nötigen Wechsel des Einspritzventils 15 dieses ohne Ablassen der Kühlflüssigkeit aus dem Zylinderkopf 4 demontiert werden kann. Der Einspritzventilkühlraum 14 bildet gleichzeitig einen Bestandteil der sich oberhalb einer Zwischenwand 17 erstreckenden Kühlräume 18.

Von dem Ringraum 12 gelangt die Kühlflüssigkeit weiterhin durch Kühlkanäle 19 in Auslaßventilkühlräume 20, um von dort über weiterführende Kühlkanäle 19 ebenfalls in den Einspritzventilkühlraum 14 zu gelangen. Die Auslaßventilkühlräume 20 werden durch entsprechende Freiräume zwischen Ventilsitzringen 21 und dem Zylinderkopf 4 gebildet. Sowohl die Zugänge 10, als auch die Kühlbohrungen 13 und die Kühlkanäle 19 können zumindest teilweise in den Zylinderkopf gebohrt werden. Dabei werden entsprechende Bohröffnungen nach außen durch Stopfen 22 verschlossen. Die Zwischenwand 17 ist im übrigen zu den Kühlräumen 18 konkav ausgebildet und zwar derart, daß bei einem schrägstehenden Zylinderkopf, wie dies bei einer V-Brennkraftmaschine zwangsläufig der Fall ist, der geodätisch tiefste Punkt im Bereich des Einspritzventilkühlraums 14 ist. Dadurch ist eine vollständige Entleerung der Kühlräume 18 von Kühlflüssigkeit sichergestellt. Entsprechend sind auch zumindest ein Zugang 10 so angeordnet, daß dieser eine vollständige Entleerung des Ringraums 12 in den Zylinderkühlraum 6 ermöglicht.

Die Kühlräume 18 sind so ausgebildet, daß diese zu einem Ausgang 23 und Ausläße 26 hinführen, die je nach dem, ob die Brennkraftmaschine als Reihen-oder V-Maschine ausgebildet ist, an geodätisch höchster Stelle der Kühlräume 18 neben oder unterhalb einem Abgaskanal 24 angeordnet sind. Dabei umströmt die Kühlflüssigkeit in einem weiten Bereich den Abgaskanal 24.

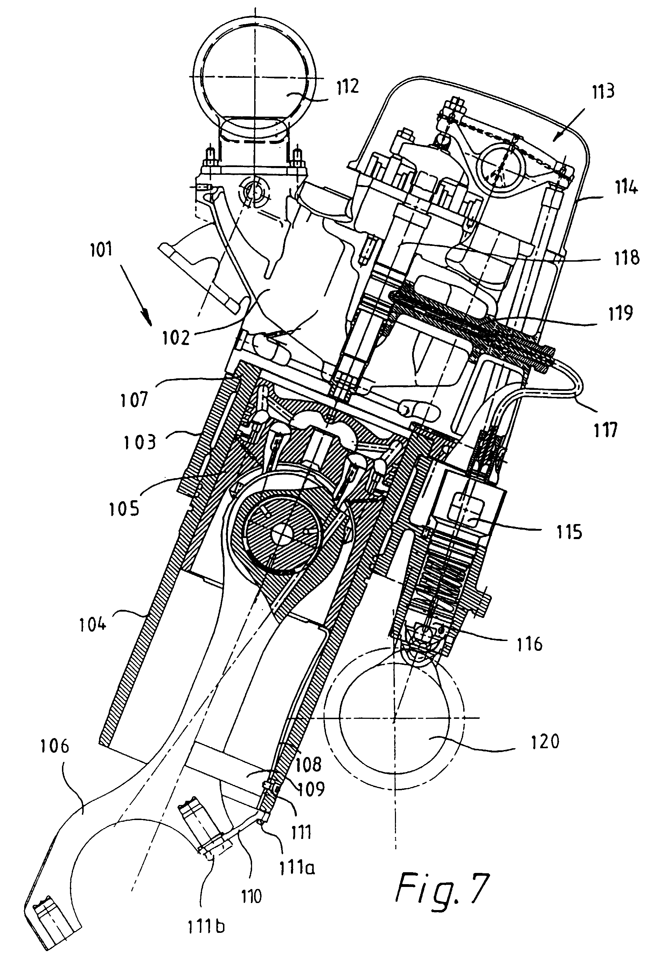

Figur 7 zeigt eine komplette Montageeinheit 101, die fertig vormontiert und auf das Kurbelgehäuse aufsetzbar ist. Die Montageeinheit 101 umfaßt maximal alle in der Zeichnung dargestellten Bauteile, wobei aber in jedem Fall der Zylinderkopf 102, das Zwischengehäuse 103, das Zylinderrohr 104, der Kolben 105 und das Pleuel 106 vorhanden sind. Dabei ist das Zwischengehäuse 103 mit dem Zylinderkopf 102 durch Montageschrauben verschraubt. Die Montageschrauben werden in nicht dargestellte Ausnehmungen am Außenumfang des Zwischengehäuses 103 eingesetzt und von unten durch eine Bohrung in dem Zwischengehäuse in den Zylinderkopf eingeschraubt. Auf diese Art und Weise wird das Zwischengehäuse 103 mit dem Zylinderkopf 102 unter gleichzeitiger Einspannung des Zylinderrohres 104 verspannt. Dazu weist das Zylinderrohr 104 einen Ringflansch 107 auf, unter den das Zwichengehäuse 103 greift. Das Pleuel 106 und der Kolben 105 sind durch eine Haltevorrichtung in dem Zylinderrohr 104 in einer genau vorgegebenen Position fixierbar. Dabei ist die Haltevorrichtung entweder ein Halteelement 108 und ein Klemmelement 109 oder ein Montagebügel 110. Das Halteelement 108, das ggfs. einstückig mit dem Klemmelement 109 ausgebildet sein kann, wird durch eine Schraube 111 an dem Zylinderrohr 104 befestigt und ist als Federelement ausgebildet, das den Kolben 105 in seiner OT-Stellung gegen den Zylinderkopf drückt. Gleichzeitig ist das Pleuel 106 in das Klemmelement hineingedrückt und wird von diesem in einer vorbestimmten Position gehalten. Alternativ ist der Montagebügel 110 vorgesehen, der ebenfalls durch eine Schraube 111a an dem Zylinderrohr 104 befestigbar ist. Mit dem anderen Ende wird der Montagebügel an einer Pleuellagerdeckelbohrung verschraubt. Dazu dient eine Schraube 111b, die in die vorhandene Gewindebohrung zur Befestigung des Pleuellagerdeckels einschraubbar ist. Die komplette Montageeinheit 101 wird zur Montage auf das Kurbelgehäuse der Brennkraftmaschine aufgesetzt, wobei während des Aufsetzens oder vor dem Aufsetzen die Kurbelwelle in eine vorgegebene Position gedreht wird. Diese Position ist so ausgelegt, daß die Montageeinheit 101 vollständig in das Kurbelgehäuse hineingeschoben werden kann, ohne daß das Pleuel gegen den entsprechenden Kurbelwellenzapfen stößt. Nachdem die Montageeinheit 101 so eingesetzt ist, wird sie über übliche Zuganker mit dem Kurbelgehäuse verschraubt. Dabei wird auch die Kurbelwelle mit dem zugehörigen Zapfen in die Lagerstelle des Pleuels 106 hineingedreht und der Pleuellagerdeckel montiert. Ist das Pleuel 106 von dem Montagebügel 110 gehalten, muß dieser selbstverständlich vorher entfernt werden, während umgekehrt das Halteelement 108 und das Klemmelement 109 auch nach der Montage des Pleuellagerdeckels entfernt werden können.

Die Montageeinheit 101 umfaßt in dem dargestellten Ausführungsbeispiel neben den zuvor aufgeführten Bauteilen auch ein Abgassammelrohrelement 112, den kompletten Ventil betätigungsmechanismus 113 mit Kipphebelbock, Kipphebelbolzen, Kipphebel, Ventilbrückenelement, Stoßstangenrohr und sämtlichen Einstellschrauben. Dabei kann die Vormontage so weit gehen, daß das Ventilspiel schon bei der Vormontage fertig eingestellt wird und die Ventildeckelhaube 114 montiert ist. Weiterhin ist in dem Ausführungsbeispiel auch die komplette Einspritzvorrichtung einschließlich des Einspritzpumpenelementes 115, dem Rollenstößel 116, der Einspritzleitung 117, dem Einspritzventil 118 und einem seitlichen Anschlußdruckstück 119 vormontierbar. Auch hierbei ist der Förderbeginn des Einspritzpumpenelementes 115 schon bei der Vormontage einstellbar, so daß bei der Montage der Montageeinheit 101 auf dem Kurbelgehäuse der Rollenstößel 116 auf die Nockenwelle 120 ohne irgendwelche Einstellarbeiten zur Anlage kommt.

## Patentansprüche

1. Brennkraftmaschine mit einem Kurbelgehäuse, in dem eine Kurbelwelle drehbar gelagert ist, an der zumindest ein Pleuel (106) angelenkt ist, das einen Kolben (105) trägt, der in einem von einem Zylinderkopf (4, 102) abgedeckten Zylinderrohr (2, 104) bewegbar ist, wobei in den Zylinderkopf (4, 102) mit Gaswechselkanälen zusammenwirkende Gaswechselventile, ein Einspritzventil (118), eine oberhalb des Zylinderkopfbodens (25) angeordnete Zwischenwand (17) und zumindest ein erster Kühlflüssigkeitsraum mit einem Zugang (10) und einem Abgang angeordnet sind, wobei der Kühlflüssigkeitsraum einen zwischen dem Zylinderkopfboden (25) und der Zwischenwand (17) angeordneten außenliegenden, durchgehenden Ringraum (12) umfaßt, der über geradlinige Kühlbohrungen (13) mit einem mittig zu dem Zylinderkopfboden (25) angeordneten Einspritzventilkühlraum (14) verbunden ist,
*dadurch gekennzeichnet,* daß weitere Kühlkanäle (19) vorhanden sind, die zumindest einen Auslaßventilkühlraum (20) mit dem Ringraum (12) und dem Einspritzventilkühlraum (14) verbinden, und daß die Zwischenwand (17) kegelig ausgebildet ist und auf der von dem Zylinderkopfboden (25) wegweisenden Seite einen konkaven Verlauf aufweist und auf der von dem Ringraum (12), den Kühlbohrungen (13) und den Kühlkanälen (19) gebildeten Seite im wesentlichen geradlinig ausgebildet ist.

2. Brennkraftmaschine nach Anspruch 1,
*dadurch gekennzeichnet,* daß in der den Ringraum (12) umgebenden äußeren Zylinderkopfumfangswand (11) zumindest ein Zugang (10) eingelassen ist, der den Ringraum (12) mit einem Zylinderkühlraum (6) verbindet.

3. Brennkraftmaschine nach einem der Ansprüche 1 oder 2,
*dadurch gekennzeichnet,* daß die Kühlflüssigkeit von dem Ringraum (12) durch die Kühlbohrungen (13) und die Kühlkanäle (9) in den Einspritzventilkühlraum (14) strömt, der ein Bestandteil der sich oberhalb der Zwischenwand (17) erstreckenden Kühlräume (18) ist.

4. Brennkraftmaschine nach einem der vorherigen Ansprüche,
*dadurch gekennzeichnet,* daß der Abgaskanal (24) zumindest teilweise kühlflüssigkeitsumströmt ist.

5. Brennkraftmaschine nach einem der vorherigen Ansprüche,
*dadurch gekennzeichnet,* daß im Bereich unterhalb eines Abgaskanalanschlußflansches ein Ausgang (23) und neben dem Abgaskanalanschlußflansch ein Abfluß (26) der Kühlflüssigkeit aus dem Zylinderkopf (4, 102) angeordnet sind.

6. Brennkraftmaschine nach einem der vorherigen Ansprüche,
*dadurch gekennzeichnet,* daß die Ausgänge (23) dann an eine Abwassersammelleitung angeschlossen sind, wenn die Brennkraftmaschine mit V-förmig angeordneten Zylinderreihen ausgestaltet und die Zylinderköpfe (4, 102) so angeordnet sind, daß die Ausgänge (23) geodätisch höher liegen als die Kühlräume (18) der Zylinderköpfe.

7. Brennkraftmaschine nach einem der vorherigen Ansprüche,
*dadurch gekennzeichnet,* daß an die Abflüsse (26) eine Abwassersammelleitung angeschlossen ist, wenn die Zylinderrohre (2) der Brennkraftmaschine im wesentlichen vertikal ausgerichtet sind und die Abflüsse (26) geodätisch höher liegen als die Kühlräume (18) der Zylinderköpfe.

8. Brennkraftmaschine nach einem der vorherigen Ansprüche,
*dadurch gekennzeichnet,* daß bei Ausbildung der Brennkraftmaschine mit zwei V-förmig angeordneten Zylinderreihen die Konkavität der Zwischenwand (17) so bemessen ist, daß deren geodätisch tiefster Punkt im Einspritzventilkühlraum (14) liegt.

9. Brennkraftmaschine nach einem der vorherigen Ansprüche,
*dadurch gekennzeichnet,* daß der Zylinderkühlraum (6) in ein Zwischengehäuse (1, 103) eingelassen ist.

10. Brennkraftmaschine nach einem der vorherigen Ansprüche,
*dadurch gekennzeichnet,* daß der Zylinderkühlraum (6) einen Zulauf (5) aufweist, der mit einer Verteilleitung in dem Kurbelgehäuse zusammenwirkt.

11. Brennkraftmaschine nach einem der vorherigen Ansprüche,
*dadurch gekennzeichnet,* daß der Zylinder ein Zylinderrohr (2, 104) umfaßt, das in das Zwischengehäuse (1, 103) einsetzbar, mit einem umlaufenden Bund (3, 107) zwischen Zylinderkopf (4, 102) und Zwischengehäuse (1, 103) verspannbar und im Bereich unterhalb des Zulaufs (5) gegenüber dem Zwischengehäuse (1, 103) abdichtbar ist.

12. Brennkraftmaschine nach einem der vorherigen Ansprüche,
*dadurch gekennzeichnet,* daß die Verteilleitung zu dem Zulauf (5) absperrbar und der Zulauf (5) mit einer Ablaßleitung verbindbar ist.

13. Brennkraftmaschine nach einem der vorherigen Ansprüche,
*dadurch gekennzeichnet,* daß der Zylinderkopf (4, 102), das Zwischengehäuse (1, 103), das Zylinderrohr (2, 104), der Kolben (105) und das Pleuel (106) eine an der Brennkraftmaschine verbaubare Montageeinheit (101) bilden, die vormontierbar ist.

14. Brennkraftmaschine nach einem der vorherigen Ansprüche,
*dadurch gekennzeichnet,* daß der Zylinderkopf (4, 102) mit dem Zwischengehäuse (1, 103) über Montageschrauben verschraubbar ist, und daß das Zylinderrohr (2, 104) über einen Ringflansch (107) zwischen dem Zylinderkopf (4, 102) und dem Zylinderrohr (2, 104) eingeklemmt ist.

15. Brennkraftmaschine nach einem der vorherigen Ansprüche,
*dadurch gekennzeichnet,* daß der Kolben (105) und das Pleuel (106) mit einer Haltevorrichtung in dem Zylinderrohr (2, 104) in einer vorgegebenen Position fixierbar sind.

16. Brennkraftmaschine nach einem der vorherigen Ansprüche,
*dadurch gekennzeichnet,* daß die Haltevorrichtung ein am unteren Ende des Zylinderrohres (2, 104) befestigbares Halteelement (108) ist, das den Kolben (105) in die ungefähre OT-Stellung drückt und ein Klemmelement (109) ist, daß das Pleuel (106) zumindest angenähert mittig in Bezug zu der Zylinderrohrlängsebene festlegt.

17. Brennkraftmaschine nach einem der vorherigen Ansprüche,
*dadurch gekennzeichnet,* daß die Haltevorrichtung ein Montagebügel (110) ist, der am unteren Ende des Zylinderrohres (2, 104) und an einem Pleuellagerdeckelgewinde des Pleuels verschraubbar ist.

18. Brennkraftmaschine nach einem der vorherigen Ansprüche,
*dadurch gekennzeichnet,* daß die Montageeinheit (101) alle zugehörigen Bauteile wie Einspritzventil (118), Einspritzpumpenelement (115), Einspritzleitung (117), Stoßstangen, Rollenstößel usw. umfaßt.

19. Verfahren zum Montieren einer Brennkraftmaschine nach einem der vorherigen Ansprüche, wobei das Zylinderrohr (2, 104) unter Einfügung eines Zwischengehäuses (1, 103) an einem Kurbelgehäuse befestigbar ist,
*dadurch gekennzeichnet,* daß der Zylinderkopf (4, 102), das Zwischengehäuse (1, 103), das Zylinderrohr (2, 104), der Kolben (105) und das Pleuel (106) eine Montageeinheit (101) bilden, die vormontierbar ist und daß diese Montageeinheit (101) insgesamt auf das Kurbelgehäuse aufgesetzt und mit diesem verschraubt wird.

20. Verfahren nach Anspruch 19,
*dadurch gekennzeichnet,* daß bei der Montage die Kurbelwelle in die Pleuellagerschale hineingedreht wird und anschließend eine den Kolben (105) und das Pleuel (106) in einer vorbestimmten Lage festhaltende Haltevorrichtung entfernt wird.

## Claims

1. An internal combustion engine comprising a crankcase in which a crankshaft is rotatably mounted and articulated to at least one connecting rod (106) which bears a piston (105) which is movable in a cylinder (2, 104) covered by a cylinder head (4, 102), wherein the cylinder head (4, 102) contains gas change valves cooperating with gas change ducts, an injection valve (118a), a partition (17) disposed above the cylinder-head bottom (25) and at least one first coolant chamber having an access passage (10) and an outlet passage, the coolant chamber comprising a continuous external annular chamber (12) disposed between the cylinder-head bottom (25) and the partition (17) and connected by straight cooling bores (13) to an injection-valve cooling chamber (14) disposed centrally relative to the cylinder-head bottom (25),
**characterised in that** further cooling ducts (19) are present and connect at least one outlet-valve cooling chamber (20) to the annular chamber (12) and to the inlet-valve cooling chamber (14), and the partition (17) is conical and is concave on the side pointing away from the cylinder-head bottom (25) and is substantially straight on the side formed by the annular chamber (12), the cooling bores (13) and the cooling ducts (19).

2. An engine according to claim 1, **characterised in that** at least one access passage (10) is formed in the outer peripheral wall (11) of the cylinder head surrounding the annular chamber (12), and connects the annular chamber (12) to a cylinder cooling chamber (6).

3. An engine according to claim 1 or 2, **characterised in that** the coolant flows from the annular chamber (12) through the cooling bores (13) and cooling ducts (9) into the injection-valve cooling chamber (14), which is a component of the cooling chambers (18) extending above the partition (17).

4. An engine according to any preceding claim, **characterised in that** the exhaust duct (24) is at least partly surrounded by a flow of coolant.

5. An engine according to any preceding claim, **characterised in that** an outlet (23) is disposed in the region under an exhaust-gas duct connecting flange and an outlet (26) is provided near the said flange for the coolant from the cylinder head (4, 102).

6. An engine according to any preceding claim, **characterised in that** the outlets (23) are connected to a waste-water collecting pipe when the engine has rows of cylinders arranged in a V, and the cylinder heads (4, 102) are so disposed that the outlets (23) are geodetically higher than the cooling chambers (18) of the cylinder heads.

7. An engine according to any preceding claim, **characterised in that** a waste-water collecting pipe is connected to the outlets (26) when the cylinders (2) of the engine are aligned substantially vertically and the outlets (26) are geodetically higher than the cooling chambers (18) of the cylinder heads.

8. An engine according to any preceding claim, **characterised in that** when the engine has two rows of cylinders arranged in a V, the concavity of the partition (17) is dimensioned so that its geodetically lowest point is in the injection-valve cooling chamber (14).

9. An engine according to any preceding claim, **characterised in that** the cylinder cooling chamber (6) is formed in an intermediate casing (1, 103).

10. An engine according to any preceding claim, **characterised in that** the cylinder cooling chamber (6) has an inlet (5) which co-operates with a distribution line in the crankcase.

11. An engine according to any preceding claim, **characterised in that** the cylinder comprises a tubular cylinder (2, 104) which can be inserted in the intermediate casing (1, 103), clamped by means of a peripheral collar (3, 107) between the cylinder head (4, 102) and the partition (1, 103), and can be sealed from the intermediate casing (1, 103) in the region below the inlet (5).

12. An engine according to any preceding claim, **characterised in that** the distribution line to the inlet (5) can be shut off, and the inlet (5) can be connected to a drainage pipe.

13. An engine according to any preceding claim, **characterised in that** the cylinder head (4, 102), the intermediate casing (1, 103), the cylinder (2, 104), the piston (105) and the connecting rod (106) form an assembly unit (101) which can be pre-assembled and fitted on the engine.

14. An engine according to any preceding claim, **characterised in that** the cylinder head (4, 102) can be screwed to the intermediate casing (1, 103) by screws, and the cylinder (2, 104) can be clamped by means of an annular flange (107) between the cylinder head (4, 102) and the cylinder (2, 104).

15. An engine according to any preceding claim, **characterised in that** the piston (105) and the connecting rod (106) can be secured in a preset position in the cylinder (2, 104) by a retaining device.

16. An engine according to any preceding claim, **characterised in that** the retaining device is a retaining element (108) which can be secured to the lower end of the cylinder (2, 104) and presses the piston (105) approximately into the upper dead-centre position, and is also a clamping element (109) which secures the connecting rod (106) at least approximately centrally relative to the longitudinal plane of the cylinder.

17. An engine according to any preceding claim, **characterised in that** the retaining device is a stirrup (110) for screwing to the lower end of the cylinder (2, 104) and to a thread on the lid of the connecting-rod bearing.

18. An engine according to any preceding claim, **characterised in that** the assembly unit (101) comprises all associated components such as an injection valve (118), an injection-pump element (115), an injection line (117), push rods, roller tappets, and so on.

19. A method of assembling an engine according to any preceding claim, wherein the cylinder (2, 104) can be secured to a crankshaft with interposition of an intermediate casing (1, 103), **characterised in that** the cylinder head (4, 102), the intermediate casing (1, 103), the cylinder (2, 104), the piston (105) and the connecting rod (106) form an assembly unit (101) which can be pre-assembled and the entire assembly unit (101) is placed on the crankcase and screwed thereto.

20. A method according to claim 19, **characterised in that** during assembly the crankshaft is screwed into the connecting-rod bearing shell, followed by removal of a retaining device for holding the piston (105) and the connecting rod (106) in a predetermined position.

## Revendications

1. Moteur à combustion interne avec un carter de vilebrequin, dans lequel est monté un arbre de vilebrequin de façon à pouvoir tourner, sur lequel est articulé au moins une bielle (106), bielle qui porte un piston (105) qui peut se déplacer dans une chemise de cylindre (2, 104) recouverte par une culasse (4, 102), alors que sont disposés dans la culasse (4, 102) des soupapes pour les gaz d'admission et d'échappement qui coopèrent avec des canaux d'échange des gaz, un injecteur (118), une paroi intermédiaire (17) disposée au dessus de la base de la culasse (25), et au moins un premier volume pour le liquide de refroidissement avec une entrée (10) et une sortie, le volume pour le liquide de refroidissement comprenant un espace annulaire (12) qui va de bout en bout, et qui se trouve à l'extérieur entre la base de la culasse (25) et la paroi intermédiaire (17), ce volume étant relié par des alésages rectilignes de refroidissement (13) à un volume pour le refroidissement de l'injecteur (14), disposé au centre de la base de la culasse (25),
caractérisé en ce qu'
• il y a d'autres canaux de refroidissement (19) qui relient au moins un volume de refroidissement des soupapes d'échappement (20) au volume annulaire (12) et au volume de refroidissement de l'injecteur (14), et
• la paroi intermédiaire (17) est constituée de façon conique et présente un profil concave sur le côté qui est tourné à l'opposé de la base du cylindre (25) et qui est constitué de façon sensiblement rectiligne sur le côté formé par le volume annulaire (12), les alésages de refroidissement (13) et les canaux de refroidissement (19).

2. Moteur à combustion interne selon la revendication 1,
caractérisé en ce que
dans la paroi (11) de pourtour de la culasse, extérieure qui entoure le volume annulaire (12) on a ménagé au moins un passage (10) qui relie le volume annulaire (12) à un volume de refroidissement du cylindre (6).

3. Moteur à combustion interne selon l'une des revendications 1 ou 2,
caractérisé en ce que
le liquide de refroidissement s'écoule à partir du volume annulaire (12) à travers les alésages de refroidissement (13) et les canaux de refroidissement (9) dans le volume de refroidissement de l'injecteur (14) qui est une pièce constitutive des volumes de refroidissement (18) qui s'étendent au dessus de la paroi intermédiaire (17).

4. Moteur à combustion interne selon l'une des revendications précédentes,
caractérisé en ce que
le canal des gaz d'échappement (24) est au moins en partie baigné par le liquide de refroidissement.

5. Moteur à combustion interne selon l'une des revendications précédentes,
caractérisé en ce que
dans la zone qui se trouve en dessous d'une bride de raccordement du canal des gaz d'échappement sont disposés une évacuation (23) et en plus de la bride de raccordement du canal pour les gaz d'échappement un écoulement (26) du liquide de refroidissement sortant de la culasse (4, 102).

6. Moteur à combustion interne selon l'une des revendications précédentes,
caractérisé en ce que
les sorties (23) sont alors raccordées à une conduite qui collecte les eaux usées, quand le moteur à combustion interne a une configuration avec des lignes de cylindres disposées en V et quand les culasses (4, 102) sont disposées de telle sorte que les sorties (23) se trouvent géodésiquement plus hautes que les volumes de refroidissement (18) des culasses.

7. Moteur à combustion interne selon l'une des revendications précédentes,
caractérisé en ce que
l'on raccorde aux évacuations (26) une conduite de collecte des eaux usées, quand les chemises des cylindres (2) du moteur à combustion interne sont orientées de façon sensiblement verticale et quand les évacuations (26) se trouvent géodésiquement plus haut que les volumes de refroidissement (18) des culasses.

8. Moteur à combustion interne selon l'une des revendications précédentes,
caractérisé en ce que
quand le moteur à combustion interne est constitué avec deux lignes de cylindres disposées en V, la concavité de la paroi intermédiaire (17) a une dimension telle que son point géodésiquement le plus bas se trouve dans le volume de refroidissement de l'injecteur.

9. Moteur à combustion interne selon l'une des revendications précédentes,
caractérisé en ce que
le volume de refroidissement du cylindre (6) est inséré dans un carter intermédiaire (1, 103).

10. Moteur à combustion interne selon l'une des revendications précédentes,
caractérisé en ce que
le volume de refroidissement du cylindre (6) présente une arrivée (5) qui coopère avec une distribution dans le carter du vilebrequin.

11. Moteur à combustion interne selon l'une des revendications précédentes,
caractérisé en ce que
le cylindre comprend une chemise de cylindre (2, 104) qui peut être insérée dans le carter intermédiaire (1, 103) et peut être serré avec une collerette faisant tout le tour (3, 107) se trouvant entre la culasse (4, 102) et le carter intermédiaire (1, 103) et peut être rendue étanche dans la zone qui se trouve en dessous de l'arrivée (5) par rapport au carter intermédiaire (1, 103).

12. Moteur à combustion interne selon l'une des revendications précédentes,
caractérisé en ce que
la conduite de distribution peut être obturée en direction de l'arrivée (5) et l'arrivée (5) peut être reliée à une conduite d'évacuation.

13. Moteur à combustion interne selon l'une des revendications précédentes,
caractérisé en ce que
la culasse (4, 102), le carter intermédiaire (1, 103), la chemise de cylindre (2, 104), le piston (105) et la bielle (106) forment une unité de montage (101) qui peut être montée sur le moteur à combustion interne, et que l'on peut assembler au préalable.

14. Moteur à combustion interne selon l'une des revendications précédentes,
caractérisé en ce que
• la culasse (4, 102) peut être vissée avec le carter intermédiaire (1, 103) au moyen de vis de montage, et
• la chemise de cylindre (2, 104) est serrée au moyen d'une bride annulaire (107) entre la culasse (4, 102) et la chemise du cylindre (2, 104).

15. Moteur à combustion interne selon l'une des revendications précédentes,
caractérisé en ce que
le piston (105) et la bielle (106) peuvent être fixés avec un dispositif de maintien dans la chemise de cylindre (2, 104) dans une position prédéfinie.

16. Moteur à combustion interne selon l'une des revendications précédentes,
caractérisé en ce que
le dispositif de maintien est un élément de maintien (108) qui peut être fixé à l'extrémité inférieure de la chemise du cylindre (2, 104) qui comprime le piston (105) à peu près dans la position du point mort haut et est un élément de serrage (109) qui immobilise la bielle (106) de façon au moins approximative au milieu par rapport au plan longitudinal de la chemise du cylindre.

17. Moteur à combustion interne selon l'une des revendications précédentes,
caractérisé en ce que
le dispositif de maintien est un étrier de montage (110) que l'on peut visser à l'extrémité inférieure de la chemise de cylindre (2, 104) et à un filetage du chapeau du coussinet de la bielle.

18. Moteur à combustion interne selon l'une des revendications précédentes,
caractérisé en ce que
l'unité de montage (101) comprend toutes les pièces constitutives correspondantes telles que l'injecteur (118), l'élément de pompe d'injection (115), la conduite d'injection (117), les tiges de poussoir, le poussoir à galets, etc.

19. Procédé servant à monter un moteur à combustion interne selon l'une des revendications précédentes, la chemise du cylindre (2, 104) pouvant être fixée en ajoutant un carter intermédiaire (1, 103) à un carter de vilebrequin,
caractérisé en ce que
• la culasse (4, 102), le carter intermédiaire (1, 103), la chemise de cylindre (2, 104), le piston (105), et la bielle (106) forment une unité de montage (101) qui peut être montée au préalable, et
• cette unité de montage (101) est mise en entier sur le carter du vilebrequin et est vissée avec celui-ci.

20. Procédé selon la revendication 19,
caractérisé en ce que
lors du montage l'on fait tourner l'arbre de vilebrequin dans la coquille du coussinet de la bielle et ensuite on enlève un dispositif de maintien qui maintenait dans une position prédéterminée le piston (105) et la bielle (106).
